# EUROPEAN PATENT APPLICATION

(11) **EP 4 746 355 A1**
(43) Date of publication of application: **20.05.2026**
(21) Application number: 24842785.8
(22) Date of filing: 15.04.2024
(51) Int. Cl.: H04L 12/28, G06F 21/44, H04L 9/32

(54) **SETTING METHOD, NETWORK DEVICE, AND COMMUNICATION SYSTEM**

(30) Priority: 14.07.2023 JP 2023115889
(71) Applicant: Panasonic Intellectual Property Management Co., Ltd., Kadoma-shi, Osaka 571-0057 (JP)
(72) Inventor: UJIIE Yoshihiro, kadoma-shi, Osaka 571-0057 (JP); HAGA Tomoyuki, kadoma-shi, Osaka 571-0057 (JP); HIRAISHI Rikiya, kadoma-shi, Osaka 571-0057 (JP); YAMAMOTO Masaya, kadoma-shi, Osaka 571-0057 (JP); TSUTSUI Tomoaki, kadoma-shi, Osaka 571-0057 (JP); ODA Tomohiro, kadoma-shi, Osaka 571-0057 (JP)
(74) Representative: Grünecker Patent- und Rechtsanwälte PartG mbB
(86) International application number: PCT/JP2024/015010
(87) International publication number: WO 2025/017985

(57) **Abstract**

A setting method for a network device that forwards frames in a home network includes obtaining a first certificate of one of a plurality of types from a first device that is attempting to connect to the network device and that holds the first certificate, identifying a first type as the type of the obtained first certificate, and performing first setting processing for connecting the first device to the network device such that the first device belongs to a first segment associated with the identified first type among one or more segments that are one or more forwarding ranges of the frames of the network device and that are each associated with a type of certificate.

## Description

### Technical Field

The present invention relates to a setting method, a network device, and a communication system.

### Background Art

In communication systems, there is a technique for updating records relating to security association (see PTL 1).

### Citation List

### Patent Literature

PTL 1: Japanese Patent No. 6490703

### Summary of Invention

### Technical Problem

There is, however, a problem that it is difficult to suppress security attacks in a home network.

The present disclosure, therefore, provides a setting method for a network device and the like capable of suppressing security attacks in a home network.

### Solution to Problem

A setting method according to an aspect of the present disclosure is a setting method for a network device that forwards frames in a home network. The setting method includes obtaining a first certificate of one of a plurality of types from a first device that is attempting to connect to the network device and that holds the first certificate, identifying a first type as the type of the obtained first certificate, and performing first setting processing for connecting the first device to the network device such that the first device belongs to a first segment associated with the identified first type among one or more segments that are one or more forwarding ranges of the frames of the network device and that are each associated with a type of certificate.

It should be noted that general or specific embodiments may be implemented as a system, an apparatus, an integrated circuit, a computer program, a computer-readable storage medium such as a CD-ROM, or any selective combination thereof.

### Advantageous Effects of Invention

The setting method in the present disclosure can suppress security attacks in a home network.

### Brief Description of Drawings

[Fig. 1] Fig. 1 is a schematic diagram illustrating configuration of a communication system according to a first embodiment.
[Fig. 2] Fig. 2 is block diagram illustrating configuration of a network device according to the first embodiment.
[Fig. 3] Fig. 3 is a block diagram illustrating configuration of a terminal according to the first embodiment.
[Fig. 4] Fig. 4 is a block diagram illustrating configuration of an air conditioner according to the first embodiment.
[Fig. 5] Fig. 5 is an explanatory diagram illustrating a device certificate according to the first embodiment.
[Fig. 6] Fig. 6 is an explanatory diagram illustrating a setting table according to the first embodiment.
[Fig. 7] Fig. 7 is a first flowchart illustrating a setting method for the network device according to the first embodiment.
[Fig. 8] Fig. 8 is a second flowchart illustrating the setting method for the network device according to the first embodiment.
[Fig. 9] Fig. 9 is a first sequence diagram illustrating operations of the communication system according to the first embodiment.
[Fig. 10] Fig. 10 is a second sequence diagram illustrating operations of the communication system according to the first embodiment.
[Fig. 11] Fig. 11 is an explanatory diagram illustrating a forwarding control table for controlling forwarding of frames by the network device according to the first embodiment.
[Fig. 12] Fig. 12 is a first sequence diagram illustrating an operation for forwarding an operation instruction in the communication system according to the first embodiment.
[Fig. 13] Fig. 13 is a second sequence diagram illustrating the operation for forwarding an operation instruction in the communication system according to the first embodiment.
[Fig. 14] Fig. 14 is a first flowchart illustrating a process at a time when revocation information is obtained by the network device according to the first embodiment.
[Fig. 15] Fig. 15 is a second flowchart illustrating the process at a time when revocation information is obtained by the network device according to the first embodiment.
[Fig. 16] Fig. 16 is an explanatory diagram illustrating another example of the setting table according to the first embodiment.
[Fig. 17] Fig. 17 is an explanatory diagram illustrating a client certificate according to a second embodiment.
[Fig. 18] Fig. 18 is a first flowchart illustrating a process at a time when revocation information is obtained by a network device according to the second embodiment.
[Fig. 19] Fig. 19 is a second flowchart illustrating the process at a time when revocation information is obtained by the network device according to the second embodiment.
[Fig. 20] Fig. 20 is a schematic diagram illustrating configuration of a communication system according to a third embodiment.
[Fig. 21] Fig. 21 is an explanatory diagram illustrating an example of a setting table according to the third embodiment.
[Fig. 22] Fig. 22 is an explanatory diagram illustrating a forwarding control table for controlling forwarding of frames by a network device according to the third embodiment.

### Description of Embodiments

### (Underlying Knowledge Forming Basis of Present Disclosure)

The present inventor has found that the following problem arises with respect to the technique relating to the communication system described in "Background Art".

In communication systems, there is a technique for forming a security association with two devices using a simple protocol and updating records relating to the security association (see PTL 1). The records relating to the security association are sometimes backed up to a cloud server.

When a plurality of devices is connected to a home network, on the other hand, one of the plurality of devices might carry out a security attack on another device. In particular, the device might carry out a security attack on another device by transmitting frames to the other device using communication via a relay apparatus (generally called a broadband router, a home router, or the like) in the home network.

The conventional technique has a problem that it is difficult to suppress such a security attack in a home network.

The present invention, therefore, provides a setting method for a network device and the like capable of suppressing security attacks in a home network.

Aspects obtained from what is disclosed herein will be described as examples, and effects produced by the aspects and the like will be described.
(1) A setting method for a network device that forwards frames in a home network, the setting method including obtaining a first certificate of one of a plurality of types from a first device that is attempting to connect to the network device and that holds the first certificate, identifying a first type as the type of the obtained first certificate, and performing first setting processing for connecting the first device to the network device such that the first device belongs to a first segment associated with the identified first type among one or more segments that are one or more forwarding ranges of the frames of the network device and that are each associated with a type of certificate.
   According to the above aspect, the network device connects a device thereto such that the device belongs to a different segment depending on a type of certificate held by the device. As a result, since the network device can reject forwarding of frames between devices that hold certificates of different types, security attacks that can be carried out between the devices which hold certificates of different types can be avoided. With the setting method, therefore, security attacks in a home network can be suppressed.
(2) The setting method according to (1), further including obtaining a second certificate of a type different from the first type among the plurality of types from a second device that is attempting to connect to the network device and that holds the second certificate, identifying a second type as the type of the obtained second certificate, and performing second setting processing for connecting the second device to the network device such that the second device belongs to, among the one or more segments, a second segment that is associated with the identified second type and that is different from the first segment.
   According to the above aspect, the network device connects the first device that holds a certificate of the first type and the second device that holds a certificate of the second type thereto such that the first and second devices belong to different segments. As a result, since the network device rejects forwarding of frames between the first and second devices, which hold certificates of different types, security attacks that can be carried out between the first and second devices, which hold certificates of different types, can be avoided. With the setting method, therefore, security attacks in a home network can be suppressed.
(3) The setting method according to (1), in which the obtaining a certificate of the first type includes obtaining the first certificate from the first device when request information for an address to be used for communication in the home network is received from the first device, and in which, in the first setting processing, by transmitting response information for assigning an address corresponding to the first segment to the first device, settings are made to connect the first device to the network device such that the first device belongs to the first segment.
   According to the above aspect, the network device can obtain a certificate of a device in response to reception of address request information transmitted when the device is attempting to connect to the network device and set the network device such that the device belongs to a segment. With the setting method, therefore, by setting a segment when a device is attempting to connect to the network device, security attacks in a home network can be easily suppressed.
(4) The setting method according to any of (1) to (3), in which the type of the first certificate is determined in advance in accordance with a certification authority that has certified the first device.
   According to the above aspect, the network device can determine a segment to which a device is to belong to in accordance with a certification authority that has certified the device. As a result, the network device can connect devices thereto such that devices certified by the same certification authority belong to the same segment. As a result, devices can be connected to the network device such that devices certified by the same certification authority become communicable with each other, and a probability that a security attack is carried out on a device can be reduced. With the setting method, therefore, security attacks in a home network can be suppressed.
(5) The setting method according to (4), in which the first certificate is a certificate proving that the first device has been certified by the certification authority and is a certificate including identification information unique to the first device.
   According to the above aspect, the network device can more easily reduce the probability that a security attack is carried out on a device by connecting, using certificates proving that devices have been certified, the devices thereto such that devices certified by the same certification authority belong to the same segment. With the setting method, therefore, security attacks in a home network can be suppressed more easily.
(6) The setting method according to (4), in which the first certificate is a certificate proving that a service provider who provides a service for the first device has certified, as the certification authority, the first device as a client of the service, and is a certificate including identification information unique to the client.
   According to the above aspect, the network device can more easily reduce the probability that a security attack is carried out on a device by connecting, using certificates proving that devices have been certified as clients of a service, the devices thereto such that devices certified by the same certification authority belong to the same segment. With the setting method, therefore, security attacks in a home network can be suppressed more easily.
(7) The setting method according to any of (1) to (6), further including obtaining revocation information indicating revocation of the first certificate obtained from the first device, and making, when the revocation information is obtained, settings for excluding the first device from the first segment.
   According to the above aspect, since the network device excludes a device from a segment to which the device has belonged when a certificate held by the device is revoked, a probability that a security attack is carried out by the device with the revoked certificate on another device can be reduced. With the setting method, therefore, even when a certificate of a device is revoked, security attacks in a home network can be suppressed.
(8) The setting method according to (7), in which the type of the first certificate is determined in advance in accordance with a certification authority that has certified the first device, and in which the revocation information is revocation information that includes identification information unique to the first device and that indicates revocation of a certificate proving that the first device has been certified by the certification authority.
   According to the above aspect, the network device can reduce, by excluding a device from a segment when a certificate proving that the device has been certified is revoked, a probability that a security attack is carried out on another device. With the setting method, therefore, even when a certificate of a device is revoked, security attacks in a home network can be suppressed.
(9) The setting method according to (7), in which the type of the first certificate is determined in advance in accordance with a certification authority that has certified the first device, and in which the revocation information is revocation information indicating revocation of a certificate proving that a service provider who provides a service for the first device has certified, as the certification authority, the first device as a client of the service.
   According to the above aspect, the network device can reduce, by excluding a device from a segment when a certificate proving that the device has been certified as a client of a service is revoked, the probability that a security attack is carried out on another device. With the setting method, therefore, even when a certificate of a device is revoked, security attacks in a home network can be suppressed.
(10) The setting method according to any of (1) to (6), further including obtaining revocation information indicating revocation of a certificate of a certification authority that has issued the first certificate obtained from the first device, and making, when the revocation information is obtained, settings for excluding the first device from the first segment.
   With the above aspect, since the network device excludes a device from a segment to which the device has belonged when a certification authority that has issued a certificate held by the device is revoked, a probability that a security attack is carried out by the device certified by the revoked certification authority on another device can be reduced. With the setting method, therefore, even when a certificate of a device is revoked, security attacks in a home network can be suppressed.
(11) The setting method according to any of (1) to (6), further including identifying that the first device does not hold a certificate of any of the plurality of types, and performing third setting processing for connecting the first device to the network device such that the first device belongs to a default segment among the one or more segments.
   According to the above aspect, the network device connects a device that does not hold a certificate thereto such that the device belongs to the default segment. As a result, it is possible to communicably connect to both a device that holds a certificate and a device that does not hold a certificate while rejecting forwarding of frames between the device that holds a certificate and the device that does not hold a certificate. With the setting method, therefore, security attacks in a home network can be suppressed.
(12) A network device that forwards frames in a home network, the network device including an obtainer that obtains a first certificate of one of a plurality of types from a first device that is attempting to connect to the network device and that holds the first certificate, an identifier that identifies a first type as the type of the first certificate obtained by the obtainer, and a setter that performs first setting processing for connecting the first device to the network device such that the first device belongs to a first segment associated with the first type identified by the identifier among one or more segments that are one or more forwarding ranges of the frames of the network device and that are each associated with a type of certificate.
   According to the above aspect, the network device produces the same effect as the above setting method.
(13) A communication system including the network device according to (12), and the first device attempting to connect to the network device.

According to the above aspect, the communication system produces the same effect as the above setting method.

It should be noted that these general or specific aspects may be implemented as a system, an apparatus, an integrated circuit, a computer program, a computer-readable storage medium such as a CD-ROM, or any selective combination thereof.

Embodiments will be specifically described hereinafter with reference to the drawings.

Note that the embodiments that will be described hereinafter are general or specific examples. Values, shapes, materials, components, arrangement positions and connection modes of the components, steps, order of the steps, and the like are examples, and not intended to limit the present invention. In addition, among the components mentioned in the following embodiments, components not described in the independent claims, which define broadest concepts, will be described as optional components.

### (First Embodiment)

In the present embodiment, a setting method for a network device and the like that suppresses security attacks in a home network will be described.

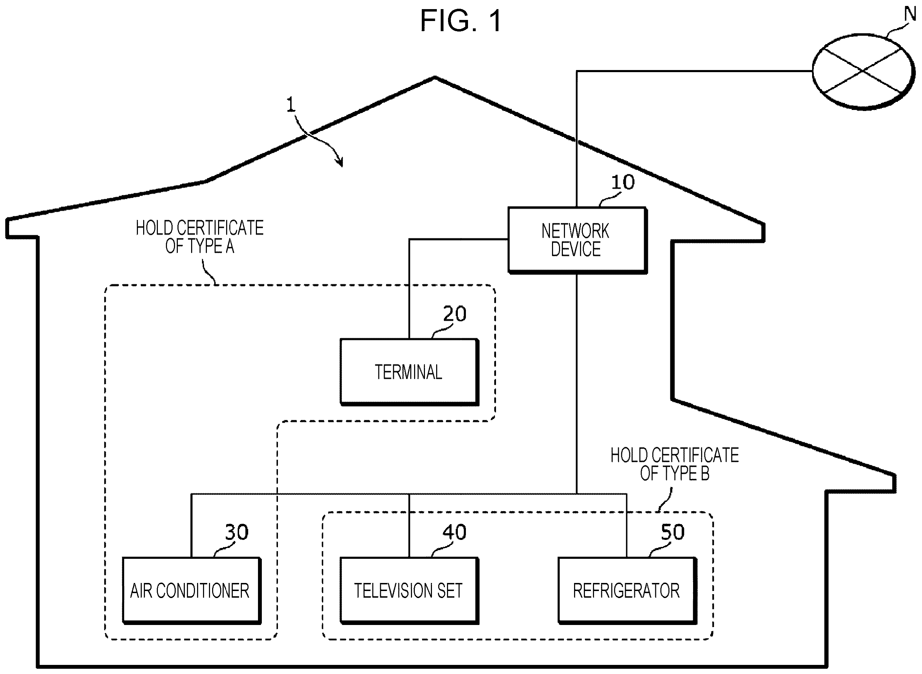

Fig. 1 is a schematic diagram illustrating configuration of a communication system 1 according to the present embodiment.

The communication system 1 illustrated in Fig. 1 is a communication system in a home network.

The communication system 1 includes a network device 10, a terminal 20, an air conditioner 30, a television set 40, and a refrigerator 50. The terminal 20 corresponds to a device connected to the communication system 1 (also simply referred to as a device). In addition, each of the air conditioner 30, the television set 40, and the refrigerator 50 is a so-called IoT (Internet of Things) home appliance corresponding to a device connected to the communication system 1 (also simply referred to as a device). Note that the devices connected to the communication system 1 are not limited to the terminal 20, the air conditioner 30, the television set 40, and the refrigerator 50, any two or more devices may be included, and another device (for example, a communication apparatus or an IoT home appliance) may be included.

The network device 10 is a relay apparatus (generally called a broadband router, a home router, or the like) that forwards communication frames (also simply referred to as frames) in the home network. The network device 10 can establish a communication link with each of the devices connected to the communication system 1, and communicate with each of the devices connected to the communication system 1 using the established communication link. In addition, the network device 10 is connected to a network N, and can communicate with communication apparatuses connected to the network N. The network device 10 can communicate with the devices connected to the network device 10 and the communication apparatuses connected to the network N by forwarding frames between the devices connected to the network device 10 and the network N.

The network N can include a network provided by an Internet service provider, a mobile communication system (3G (3rd Generation), 4G (4th Generation), 5G (5th Generation), or the like), the Internet, or the like.

The terminal 20 is an information processing terminal owned by a user. The terminal 20 can be, for example, a smartphone, a tablet terminal, a personal computer, or the like. The user can be a resident of a house with the home network, for example, but is not limited to this. The terminal 20 might hold a certificate proving that the terminal 20 has been certified by a certification authority. The certificate may be one written to a storage device when the terminal 20 is manufactured, or may be one obtained from a server or the like. The terminal 20 can obtain the certificate from a server or the like when becoming a client of a new service (for example, when a new function is installed on the terminal 20).

The certificate can be, for example, an NOC (node operational credential) or a DAC (device attestation certificate), which is a certificate in a Matter standard, which is a standard specification for smart homes. The NOC or the DAC can be issued when one or more companies have certified the device.

The terminal 20 is communicably connected to the air conditioner 30, the television set 40, or the refrigerator 50 via the network device 10. It is assumed that, when holding a legitimate certificate, the terminal 20 controls the air conditioner 30, the television set 40, or the refrigerator 50, which is an IoT home appliance, using the communication via the network device 10.

The air conditioner 30 is an air conditioner that adjusts temperature or humidity in a space. The air conditioner 30 can be a device connected to the network device 10. For example, the air conditioner 30 can change an operation state (on or off) or an operation mode (a cooling mode, a heating mode, a dehumidifying mode, etc.) under the control of the terminal 20 via the network device 10.

The television set 40 is a television receiver, which is a device that displays video content. The television set 40 can be a device connected to the network device 10. For example, the television set 40 can download and display video content under the control of the terminal 20 via the network device 10.

The refrigerator 50 is a device that refrigerates food. The refrigerator 50 can be a device connected to the network device 10. For example, the refrigerator 50 can share an image of an inside of the refrigerator 50 with the terminal 20 under the control of the terminal 20 via the network device 10.

The device connected to the network device 10 (that is, the air conditioner 30, the television set 40, or the refrigerator 50) might hold a certificate proving that the device has been certified by a certification authority. The description of the certificate that might be held by the terminal 20 also holds for this certificate.

For example, it is assumed that the terminal 20 and the air conditioner 30 hold certificates of the same type (for example, type A) and the television set 40 and the refrigerator 50 hold certificates of the same type (for example, type B). In Fig. 1, one or more devices holding certificates of the same type are surrounded by a broken-line frame.

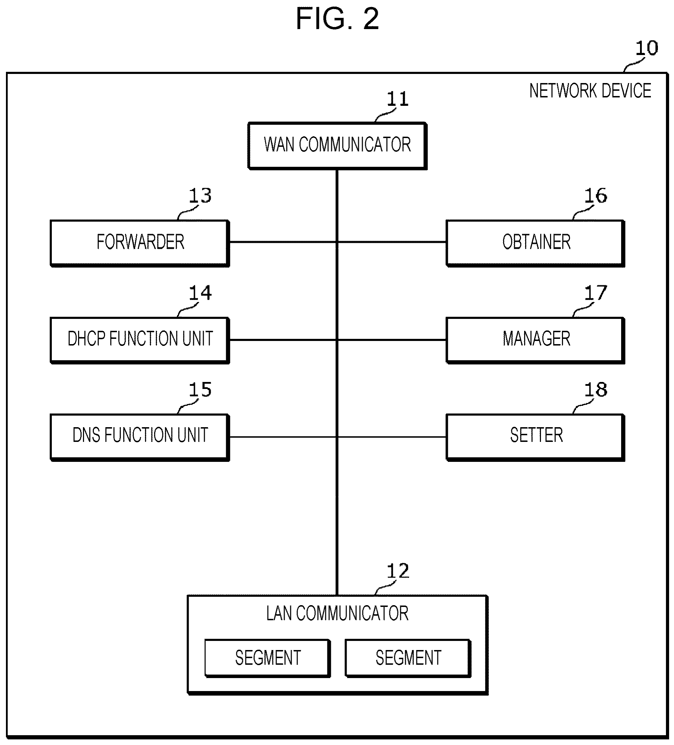

Fig. 2 is a block diagram illustrating configuration of the network device 10 according to the present embodiment.

As illustrated in Fig. 2, the network device 10 includes a WAN (wide area network) communicator 11, a LAN (local area network) communicator 12, a forwarder 13, a DHCP (dynamic host configuration protocol) function unit 14, a DNS (domain name system) function unit 15, an obtainer 16, a manager 17, and a setter 18. A subset or all of the function units included in the network device 10 are achieved when a processor (for example, a CPU (central processing unit)) included in the network device 10 executes a predetermined program using a memory.

The WAN communicator 11 is a communication interface connected to the network N. The WAN communicator 11 is a communication interface such as a network link (optical fiber or the like) of an Internet service provider or a mobile communication system link (3G, 4G, 5G, or the like).

The LAN communicator 12 is a communication interface connected to a device. The LAN communicator 12 may include one or more wired communication interfaces (for example, Ethernet (registered trademark); the same applies hereinafter), may include one or more wireless communication interfaces (for example, Wi-Fi (registered trademark); the same applies hereinafter), or may include both of these communication interfaces. A wired communication interface includes a physical port to which a communication cable (also simply referred to as a cable) is connected. In addition, a wireless communication interface includes a communication antenna and a wireless circuit.

The LAN communicator 12 forwards a frame received from a device connected to the LAN communicator 12 to another device connected to the LAN communicator 12 in accordance with a destination of the frame. The LAN communicator 12 includes one or more segments. A segment refers to a forwarding range of frames. That is, the LAN communicator 12 forwards frames between devices belonging to the same segment. On the other hand, the LAN communicator 12 forwards or does not forward frames between devices belonging to different segments, and performs control using a forwarding control table. The setter 18 controls which segment a device belongs to. Fig. 2 illustrates two segments as an example of the one or more segments.

Note that, specifically, the segments may be achieved by a VLAN (virtual local area network), or may be achieved by segments in SDN (software defined networking).

Note that the one or more segments included in the LAN communicator 12 may include a default segment. The default segment is a segment set in an initial state of the network device 10, and can be a segment to which a device that does not hold a certificate is connected.

The forwarder 13 forwards a frame received by the WAN communicator 11 from the network N to the LAN communicator 12 in accordance with a destination of the frame. The forwarder 13 also forwards a frame received by the LAN communicator 12 from a device connected to the LAN communicator 12 to the WAN communicator 11 in accordance with a destination of the frame.

The DHCP function unit 14 dynamically sets network setting information for a device connected to the LAN communicator 12. Specifically, the DHCP function unit 14 enables a device connected to the LAN communicator 12 to communicate with the network N via the network device 10 by transmitting, to the device, network setting information to be set to the device. The transmission of the network setting information can be achieved, for example, by DHCP. Note that a dynamic network setting method employing another method may be used instead of the DHCP function unit 14.

The DNS function unit 15 provides a DNS function for the devices connected to the network device 10. Specifically, in response to a DNS query (that is, a domain name resolution query) from a device connected to the LAN communicator 12, the DNS function unit 15 returns an IP address corresponding to the domain name. The DNS function unit 15 performs a query to an upstream DNS server for DNS resolution, temporarily holds an obtained query result, and responds to a DNS query from a device using the held result.

The obtainer 16 obtains a certificate held by a device attempting to connect to the LAN communicator 12 (that is, a device attempting to connect to the home network) from the device. A certificate held by a device is a certificate of one of a plurality of types. Certificates of a plurality of types can include, for example, a NOC or a DAC issued by one or more companies. Types of certificates are determined in advance in accordance with certification authorities that have certified devices. In other words, a difference in a type of certificate can mean a difference in a certification authority (issuing authority) that has issued the certificate.

The obtainer 16 transmits certificate request information to a device attempting to connect to the LAN communicator 12 and receives a certificate transmitted by the device in response to the request information to obtain the certificate. The LAN communicator 12 can transmit the certificate request information when, for example, the DHCP function unit 14 receives IP address request information.

The obtainer 16 can also obtain revocation information indicating revocation of a certificate. The revocation information is, for example, a CRL (certificate revocation list). The obtainer 16 obtains the revocation information for a certificate held by a device from a certification authority that has issued the certificate. The obtainer 16 can inquire of a certification authority that has issued a certificate held by a device whether revocation information for the certificate exists, and, if the revocation information exists, can obtain the revocation information in response to the inquiry. The obtaining of revocation information can be performed, for example, using an OCSP (online certificate status protocol).

The manager 17 manages certificates of devices. Specifically, the manager 17 identifies a type of a certificate of a device obtained by the obtainer 16, and stores the certificate. The identification of a type of certificate includes identification of the type of certificate among a plurality of types. The manager 17 also stores revocation information for a certificate of a device obtained by the obtainer 16. The manager 17 corresponds to an identifier that identifies a type of a certificate of a device obtained by the obtainer 16.

The setter 18 makes settings relating to connection of a device to the network device 10. When the obtainer 16 obtains a certificate from a device attempting to connect to the LAN communicator 12, the setter 18 performs setting processing (also referred to as first setting processing) for connecting the device to the network device 10 such that the device belongs to a segment associated with a type of the certificate. As the first setting processing, the setter 18 determines a segment to which the device is to belong, and transmits, to the device, response information for assigning an address corresponding to the determined segment. As a result, the setter 18 can make settings for connecting a device to the network device 10 such that the device belongs to a first segment.

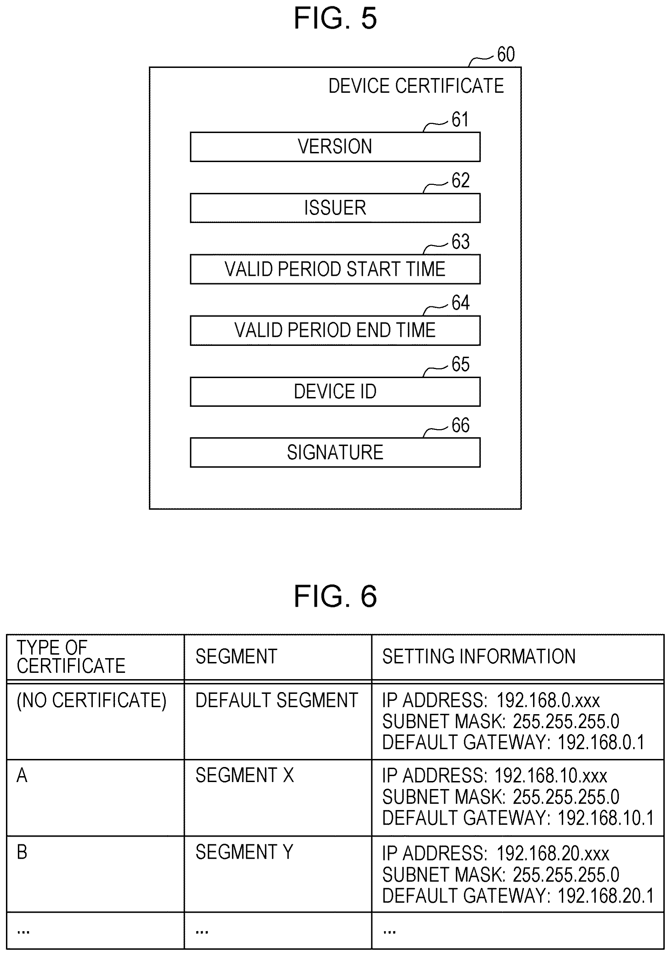

The setter 18 has a setting table (see Fig. 6 to be referred to later) including connection information for the setting processing, such as IP addresses, subnet masks, and default gateways. The setter 18 can refer to the setting table and perform the setting processing.

Specifically, when a device (also referred to as a first device) is attempting to connect to the network device 10 (that is, the LAN communicator 12), the network device 10 operates as follows.

That is, the obtainer 16 obtains a certificate (also referred to as a first certificate) of a type (also referred to as a first type) from the first device that is attempting to connect to the network device 10 (that is, the LAN communicator 12) and that holds the first certificate.

In this case, the manager 17 identifies the first type, which is the type of the first certificate obtained by the obtainer 16.

The setter 18 then performs setting processing (also referred to as first setting processing) for connecting the first device to the network device 10 such that the first device belongs to a segment (also referred to as a first segment) associated with the first type identified by the obtainer 16 among the one or more segments of the LAN communicator 12.

In addition, when another device (also referred to as a second device) holding a certificate (also referred to as a second certificate) of a type (also referred to as a second type) different from the first type is attempting to connect to the network device 10 with the first device connected to the network device 10 (that is, the LAN communicator 12), the network device 10 operates as follows.

That is, the obtainer 16 obtains the second certificate from the second device.

In this case, the manager 17 identifies the second type, which is the type of the second certificate obtained by the obtainer 16.

The setter 18 then performs setting processing (also referred to as second setting processing) for connecting the second device to the network device 10 such that the second device belongs to a second segment associated with the second type identified by the manager 17 among the one or more segments of the LAN communicator 12. Note that the second segment is different from the first segment.

Note that if the manager 17 identifies that a device does not hold any of certificates of the plurality of types, the setter 18 may perform setting processing (also referred to as third setting processing) for connecting the device to the network device 10 such that the device belongs to the default segment.

In addition, if the obtainer 16 obtains revocation information for a certificate or a certification authority, the setter 18 restricts connection with a device holding the certificate indicated by the revocation information or a certificate issued by the certification authority indicated by the revocation information. The restriction of connection will be described in detail later.

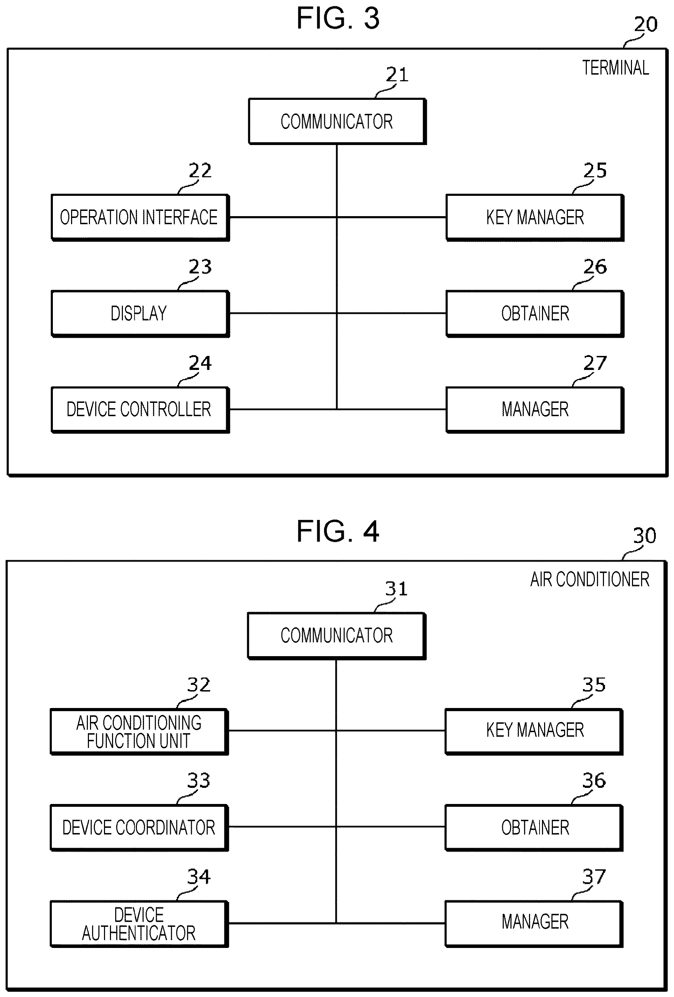

Fig. 3 is a block diagram illustrating configuration of the terminal 20 according to the present embodiment.

As illustrated in Fig. 3, the terminal 20 includes a communicator 21, an operation interface 22, a display 23, a device controller 24, a key manager 25, an obtainer 26, and a manager 27. A subset or all of the function units included in the terminal 20 are achieved when the processor (for example, a CPU (central processing unit)) included in the network device 10 executes a predetermined program using the memory.

The communicator 21 is a communication interface connected to the LAN communicator 12 of the network device 10. The communicator 21 may be a wired communication interface, or may be a wireless communication interface.

The operation interface 22 receives user operations. The operations received by the operation interface 22 can be, for example, operations performed on the IoT home appliances to be controlled by the terminal 20, such as the air conditioner 30. The operation interface 22 can be, for example, a touch panel part of a touch panel display.

The display 23 displays information as images. The information displayed by the display 23 as images can be, for example, information indicating operation states of the IoT home appliances to be controlled by the terminal 20, such as the air conditioner 30, information guiding operations performed on the IoT home appliances such as the air conditioner 30, or the like. The display 23 can be, for example, a display part of a touch panel display.

The device controller 24 performs processing for controlling other devices. The devices to be controlled by the device controller 24 include, for example, the air conditioner 30, and this case will be described as an example.

The device controller 24 is authenticated as a device that controls the air conditioner 30 by transmitting a certificate held thereby to a device authenticator 34 of the air conditioner 30 to be controlled. The device controller 24 can then transmit control information for controlling operation of the air conditioner 30 to a device coordinator 33. For example, the control information can be control information for switching the operation state of the air conditioner 30 to on or off or switching the operation mode between the cooling mode, the heating mode, and the dehumidifying mode. The control information is set on the basis of a user operation received by the operation interface 22 and transmitted to the air conditioner 30.

The key manager 25 holds and manages a key (more specifically, a private key) of the terminal 20, to which the key manager 25 belongs. The key of the terminal 20 managed by the key manager 25 can be used when the terminal 20 and the air conditioner 30 perform encrypted communication.

The obtainer 26 obtains a certificate of the terminal 20, to which the obtainer 26 belongs. The obtainer 26 can also obtain revocation information for the certificate of the terminal 20, to which the obtainer 26 belongs, or revocation information for a certification authority that has issued the certificate.

The manager 27 manages the certificate obtained by the obtainer 26. The manager 27 can also manage the revocation information obtained by the obtainer 26.

Fig. 4 is a block diagram illustrating configuration of the air conditioner 30 according to the present embodiment.

As illustrated in Fig. 4, the air conditioner 30 includes a communicator 31, an air conditioning function unit 32, the device coordinator 33, the device authenticator 34, a key manager 35, an obtainer 36, and a manager 37. A subset or all of the function units included in the air conditioner 30 are achieved when the processor (for example, a CPU (central processing unit)) included in the network device 10 executes a predetermined program using the memory.

The communicator 31 is a communication interface connected to the LAN communicator 12 of the network device 10. The communicator 31 may be a wired communication interface or a wireless communication interface.

The air conditioning function unit 32 has a function of adjusting temperature or humidity in a space where the air conditioner 30 is installed. The air conditioning function unit 32 draws in air from the space where the air conditioner 30 is installed using a fan or the like, changes temperature or humidity of the drawn-in air to approach a preset temperature or humidity, and discharges the air back into the space.

The device coordinator 33 performs processing for coordinating with another device (for example, the terminal 20). Specifically, the device coordinator 33 authenticates, using the device coordinator 33, another device attempting to control the air conditioner 30. The device coordinator 33 also receives control information for the air conditioner 30 from the other device authenticated by the device coordinator 33, and controls operation of the air conditioning function unit 32 in accordance with the received control information. The device coordinator 33 also transmits information regarding the air conditioner 30 to the other device. The information regarding the air conditioner 30 can include information regarding the operation of the air conditioning function unit 32 controlled as described above.

The device authenticator 34 obtains a certificate held by another device attempting to control the air conditioner 30 from the other device, and authenticates the other device using the obtained certificate. The certificate can be a certificate proving that the other device has been certified as a device that controls the air conditioner 30.

The key manager 35 holds and manages a key (more specifically, a private key) of the air conditioner 30, to which the key manager 35 belongs. The key of the air conditioner 30 managed by the key manager 35 can be used when another device attempting to control the air conditioner 30 and the air conditioner 30 perform encrypted communication.

The obtainer 36 obtains the certificate of the air conditioner 30, to which the obtainer 36 belongs. The obtainer 36 can also obtain revocation information for the certificate of the air conditioner 30, to which the obtainer 36 belongs, or revocation information for a certification authority that has issued the certificate.

The manager 37 manages the certificate obtained by the obtainer 36. The manager 37 can also manage the revocation information obtained by the obtainer 36.

Note that the television set 40 and the refrigerator 50 also have the same configuration as the air conditioner 30. In the case of the television set 40, a function unit that obtains and displays video content is included instead of the air conditioning function unit 32 of the air conditioner 30. In addition, in the case of the refrigerator 50, a function unit that adjusts temperature inside the refrigerator 50 and that controls a camera which captures an image of the inside of the refrigerator 50 is included instead of the air conditioning function unit 32 of the air conditioner 30.

Fig. 5 is an explanatory diagram illustrating a device certificate 60 according to the present embodiment.

The device certificate 60 is an example of a certificate held by a device. The device certificate 60 is a certificate proving that a device has been certified by a certification authority, and is a certificate including identification information unique to the device.

The device certificate 60 includes a version 61, an issuer 62, a valid period start time 63, a valid period end time 64, a device ID 65, and a signature 66.

The version 61 is information indicating a version of the device certificate 60.

The issuer 62 is identification information indicating an issuer who has issued the device certificate 60. The issuer 62 can also be regarded as identification information indicating a certification authority that has certified the device and that has issued the device certificate 60.

The valid period start time 63 is information indicating a valid period start time of the device certificate 60.

The valid period end time 64 is information indicating a valid period end time of the device certificate 60.

The device ID 65 is identification information that can uniquely identify the device proven by the device certificate 60 to have been certified. As the device ID 65, for example, a number unique to the device (for example, a serial number or a physical address of the device) or the like can be used.

The signature 66 is a digital signature of the issuer (in other words, the certification authority) who has issued the device certificate 60.

Fig. 6 is an explanatory diagram illustrating a setting table according to the present embodiment. The setting table illustrated in Fig. 6 can be used when the setter 18 performs setting processing for connecting a device to the network device 10.

Fig. 6 illustrates types A and B as types of certificate. Fig. 6 also illustrates a case where a device does not hold a certificate. Note that a type of a certificate is determined in advance, for example, in accordance with a certification authority that has issued the certificate. Here, an example in which a certificate of type A is issued by certification authority A and a certificate of type B is issued by certification authority B will be described.

For example, "no certificate" is associated with the default segment and setting information "IP address: 192.168.0.xxx, subnet mask: 255.255.255.0, default gateway: 192.168.0.1".

When a device that does not hold a certificate is attempting to connect to the network device 10, the setter 18 can connect the device to the network device 10 such that the device belongs to the default segment by setting the IP address, the subnet mask, and the default gateway included in the setting information to the device.

In addition, type A of certificates is associated with segment X and setting information "IP address: 192.168.10.xxx, subnet mask: 255.255.255.0, default gateway: 192.168.10.1".

When a device that holds a certificate of type A is attempting to connect to the network device 10, the setter 18 can connect the device to the network device 10 such that the device belongs to segment X by setting the IP address, the subnet mask, and the default gateway included in the setting information to the device.

A process performed by the network device 10 having the above configuration will be described.

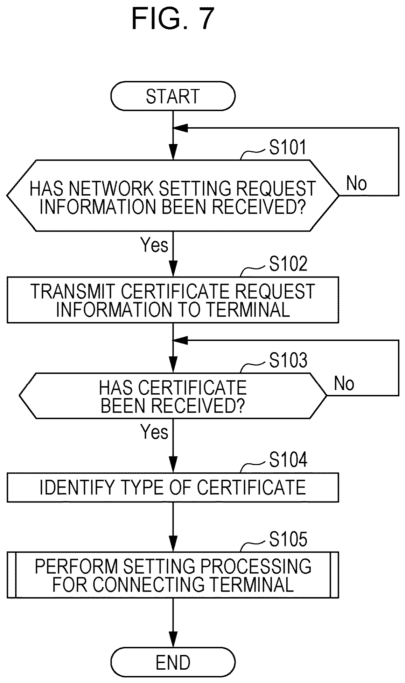

Fig. 7 is a first flowchart illustrating a setting method for the network device 10 according to the present embodiment. Fig. 7 illustrates an example of a setting method for the network device 10 at a time when the terminal 20 is attempting to connect to the network device 10.

In step S101, the DHCP function unit 14 determines whether network setting request information has been received from the terminal 20 attempting to connect to the network device 10. If determining that network setting request information has been received (Yes in step S101), the process proceeds to step S102, and if not (No in step S101), step S101 is performed again. That is, the DHCP function unit 14 waits in step S101 until network setting request information is received.

In step S102, the obtainer 16 transmits certification request information to the terminal 20.

In step S103, the obtainer 16 determines whether a certificate has been received from the terminal 20. A certificate to be received can be a certificate transmitted by the terminal 20 in response to the request information transmitted in step S102. If the obtainer 16 determines that a certificate has been received (Yes in step S103), the process proceeds to step S104, and if not (No in step S103), step S103 is performed again. That is, the obtainer 16 waits in step S103 until a certificate is received. When a certificate is received, the obtainer 16 provides the received certificate for the manager 17.

Note that, in step S103, the manager 17 can determine that the terminal 20 does not hold a certificate. Specifically, the manager 17 may determine whether a predetermined period of time has elapsed since the request information was transmitted in step S102. This is because, if the obtainer 16 does not receive a certificate even after the predetermined period of time has elapsed since the request information was transmitted in step S102, it is highly probable that the terminal 20 does not hold a certificate. It may also be determined in step S103 whether the obtainer 16 has received, from the terminal 20, information indicating that the terminal 20 does not hold a certificate. Even when the obtainer 16 has not received a certificate from the terminal 20, the manager 17 may determine that the terminal 20 does not hold a certificate and proceed to step S104 if determining that the predetermined period of time has elapsed since the request information was transmitted or that the obtainer 16 has received, from the terminal 20, information indicating that the terminal 20 does not hold a certificate. The setter 18 can thus perform the setting processing for a terminal 20 that does not hold a certificate.

In step S104, the manager 17 identifies a type of the certificate received by the obtainer 16 in step S103.

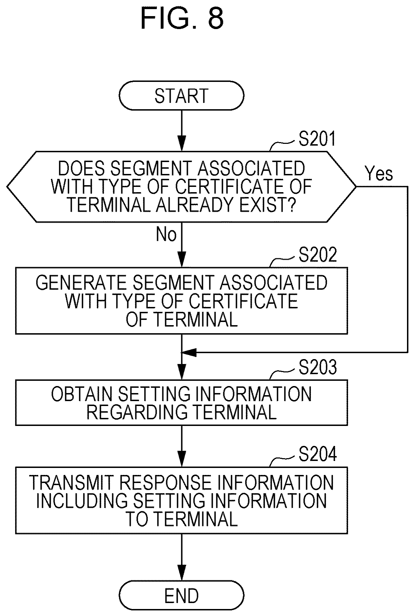

In step S105, the setter 18 performs setting processing for connecting the terminal 20. The setting processing is setting processing for connecting the terminal 20 such that the terminal 20 belongs to a segment associated with the type of certificate. Details of the setting processing are illustrated in Fig. 8.

Fig. 8 is a second flowchart illustrating the setting method for the network device 10 according to the present embodiment. A process illustrated in Fig. 8 is a detailed process included in the setting processing included in step S105.

In step S201, the setter 18 determines whether a segment associated with the type of the certificate of the terminal 20 received in step S103 already exists in the LAN communicator 12. Association between the type of the certificate of the terminal 20 and the segment is shown in the setting table (see Fig. 6), and the setter 18 can determine the segment to which the terminal 20 should belong by referring to the setting table. If the setter 18 determines that the segment already exists in the LAN communicator 12 (Yes in step S201), the process proceeds to step S203, and if not (No in step S201), the process proceeds to step S202.

Note that if the obtainer 16 determines in step S103 that the terminal 20 does not hold a certificate, the terminal 20 is associated with the default segment. In this case, the setter 18 determines that the default segment already exists (Yes in step S201), and the process proceeds to step S203.

In step S202, the setter 18 generates, in the LAN communicator 12, a segment associated with the type of the certificate of the terminal 20.

In step S203, the setter 18 obtains setting information regarding the terminal 20. The setting information regarding the terminal 20 is setting information for connecting the terminal 20 to the network device 10 such that the terminal 20 belongs to the segment associated with the type of the certificate of the terminal 20. At this time, the setter 18 obtains setting information associated with the type of the certificate of the terminal 20 as the setting information regarding the terminal 20 using the setting table (see Fig. 6).

In step S204, the setter 18 transmits, to the terminal 20, response information including the setting information obtained in step S203. It is assumed that the transmitted response information is received by the terminal 20, and the setting information included in the response information is set to the terminal 20.

Note that, when the terminal 20 is connected to the network device 10 by cable and segments corresponding to physical ports are used, the setter 18 sets a physical port connected to the cable such that the physical port belongs to the segment.

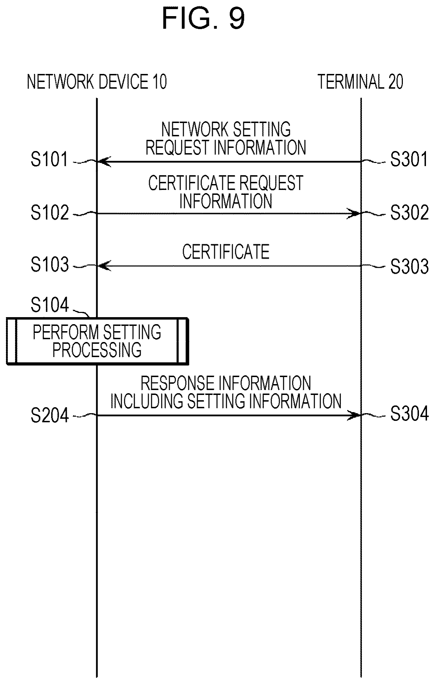

Fig. 9 is a first sequence diagram illustrating operations in the communication system 1 according to the present embodiment. The sequence diagram illustrated in Fig. 9 illustrates operations in the communication system 1 at a time when the terminal 20 is connected to the network device 10. It is assumed that the terminal 20 holds a certificate of type A issued by certification authority A. The same processing steps as those illustrated in Figs. 7 and 8 are given the same reference numerals, and detailed description thereof is omitted.

In step S301, the terminal 20 transmits network setting request information to the network device 10. The network device 10 receives the transmitted network setting request information (step S101), and transmits certificate request information to the terminal 20 (step S102).

In step S302, the terminal 20 receives the certificate request information transmitted from the network device 10.

In step S303, the terminal 20 transmits the certificate of type A to the network device 10 in response to the request information received in step S302. The network device 10 receives the transmitted certificate of type A (step S103), and performs setting processing for connecting the terminal 20 to the network device 10. In the setting processing, the network device 10 performs the setting processing such that the terminal 20 belongs to segment X associated with type A of certificates in the setting table (see Fig. 6). The network device 10 also transmits, to the terminal 20, response information including the setting information associated with type A of certificates in the setting table (see Fig. 6). The terminal 20 sets the setting information included in the transmitted response information to the communicator 21, and as a result, is communicably connected to the network device 10.

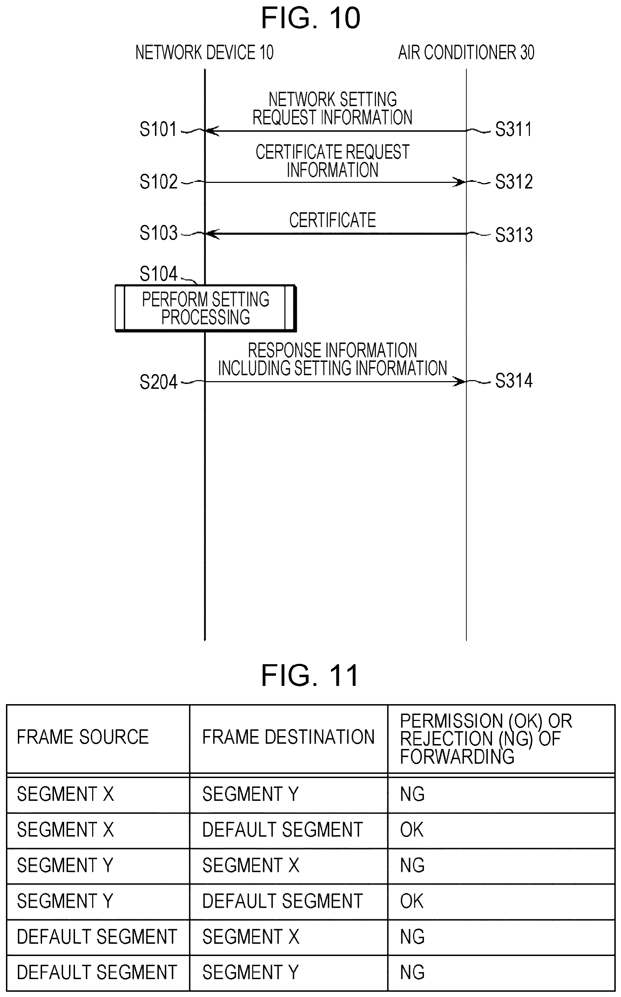

Fig. 10 is a second sequence diagram illustrating operations in the communication system 1 according to the present embodiment.

The sequence diagram illustrated in Fig. 10 illustrates operations in the communication system 1 at a time when the air conditioner 30 is connected to the network device 10. It is assumed that the air conditioner 30 holds a certificate of type A issued by certification authority A. The same processing steps as those illustrated in Figs. 7 and 8 are given the same reference numerals, and detailed description thereof is omitted.

Processing performed by the network device 10 is the same as that in the case illustrated in Fig. 9. In addition, processing performed by the air conditioner 30 (steps S311 to S314) is the same as that performed by the terminal 20 illustrated in Fig. 9 (steps S301 to S304). As a result, the network device 10 performs setting processing such that the air conditioner 30 belongs to segment X associated with type A of certificates, and the air conditioner 30 is communicably connected to the network device 10.

As a result of the above processing, the network device 10 is connected to the air conditioner 30 such that the air conditioner 30 belongs to one or more segments associated with type A of certificates.

When the terminal 20 and the air conditioner 30 hold certificates of type A and the television set 40 and the refrigerator 50 hold certificates of type B as illustrated in Fig. 1, the network device 10 is connected to the terminal 20 and the air conditioner 30 such that the terminal 20 and the air conditioner 30 belong to the same segment (for example, segment X), and is connected to the television set 40 and the refrigerator 50 such that the television set 40 and the refrigerator 50 belong to the same segment (for example, segment Y).

The forwarding of frames by the LAN communicator 12 will be described hereinafter.

As described above, the LAN communicator 12 forwards frames between devices belonging to the same segments, and forwards or does not forward frames between devices belonging to different segments. The LAN communicator 12 controls whether to forward frames on the basis of a forwarding table (described later).

Here, the forwarding of frames by the LAN communicator 12 between devices belonging to different segments will be described. Permission or rejection of forwarding of frames by the LAN communicator 12 between devices belonging to different segments can be controlled in accordance with predetermined forwarding control information. The forwarding control table, which is an example of the forwarding control information, will be described.

Fig. 11 is an explanatory diagram illustrating the forwarding control table that controls the forwarding of frames by the network device 10 according to the present embodiment.

The forwarding table illustrated in Fig. 11 includes entries indicating sources and destinations of frames and permission (described as "OK") or rejection (described as "NG") of forwarding of frames corresponding to the sources and the destinations.

For example, the forwarding table indicates that forwarding of frames between segments (specifically segments X and Y) other than the default segment is rejected. The forwarding table also indicates that forwarding of frames from the default segment to a segment other than the default segment is rejected. The forwarding table also indicates that forwarding of frames from a segment other than the default segment to the default segment is permitted.

Specifically, the forwarding table indicates that forwarding of frames whose source is segment X and whose destination is segment Y is rejected. The forwarding table also indicates that forwarding of frames whose source is segment X and whose destination is the default segment is permitted. Other frames are specified as illustrated in Fig. 11.

Note that the entries included in the forwarding table are not limited to those described above, and other entries may also be included.

If, after a frame is received, a segment to which a destination of the received frame belongs is different from a segment from which the frame has been received, the LAN communicator 12 can refer to the forwarding control table illustrated in Fig. 11 and determine whether to permit forwarding of the frame or reject forwarding of the frame (in other words, not to forward).

If determining that the forwarding of the frame is permitted, the LAN communicator 12 forwards the frame by transmitting the frame to the destination of the frame. If determining that the forwarding of the frame is rejected, on the other hand, the LAN communicator 12 does not transmit the frame (in other words, inhibits transmission). Note that if determining that the forwarding of the frame is rejected, the LAN communicator 12 may transmit, to the source of the frame, a frame including an error message indicating the rejection of the forwarding of the frame.

The LAN communicator 12 can permit or reject forwarding of operation instructions between devices connected to the LAN communicator 12 by controlling the forwarding of the frames as described above.

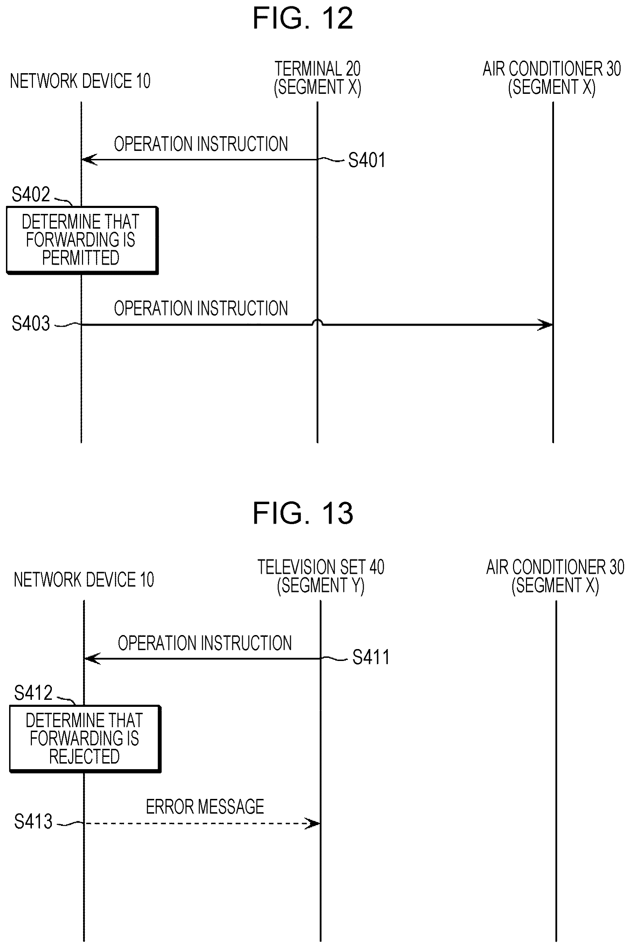

Fig. 12 is a first sequence diagram illustrating an operation for forwarding an operation instruction in the communication system 1 according to the present embodiment. Fig. 12 illustrates a case where the terminal 20 connected to the network device 10 such that the terminal 20 belongs to segment X transmits a frame including an operation instruction for the air conditioner 30 connected to the network device 10 such that the air conditioner 30 also belongs to segment X.

Specifically, in step S401, the terminal 20 transmits a frame including an operation instruction whose destination is the air conditioner 30. The network device 10 receives the transmitted frame including the operation instruction.

In step S402, since the source and the destination of the frame including the operation instruction received in step S401 are segment X, the network device 10 determines that forwarding of the frame is permitted.

In step S403, the network device 10 transmits the frame including the operation instruction received in step S401 to the air conditioner 30 to forward the frame. The air conditioner 30 receives the forwarded frame. As a result, the air conditioner 30 can obtain the operation instruction included in the frame transmitted by the terminal 20, and perform an operation according to the operation instruction.

Fig. 13 is a second sequence diagram illustrating an operation for forwarding an operation instruction in the communication system 1 according to the present embodiment. Fig. 13 illustrates a case where the television set 40 connected to the network device 10 such that the television set 40 belongs to segment Y transmits a frame including an operation instruction for the air conditioner 30 connected to the network device 10 such that the air conditioner 30 belongs to segment X.

Specifically, in step S411, the television set 40 transmits a frame including an operation instruction whose destination is the air conditioner 30. The network device 10 receives the transmitted frame including the operation instruction.

In step S412, since the source of the frame including the operation instruction received in step S411 is segment Y and the destination of the frame is segment X, the network device 10 determines that forwarding of the frame is rejected.

In step S413, the network device 10 does not transmit the frame including the operation instruction received in step S411 to the air conditioner 30, that is, inhibits forwarding. As a result, the air conditioner 30 does not receive the operation instruction transmitted by the television set 40, and does not operate in accordance with the operation instruction. Note that, in this case, the network device 10 may transmit a frame including an error message to the television set 40 that has transmitted the frame including the operation instruction.

In doing so, the network device 10 can permit forwarding of frames between devices that hold certificates of the same type or forwarding of frames from devices that hold any certificate to devices that does not hold a certificate, and inhibit forwarding of other frames. As a result, the network device 10 can enable operations between devices that hold certificates of the same type or operations performed by devices that hold any certificate on devices that do not hold any certificate while suppressing security attacks that can be carried out between devices that hold certificates of different types. The network device 10 can thus suppress security attacks in a home network.

A process in which revocation information is used will be described hereinafter.

As described above, when the obtainer 16 obtains revocation information for a certificate or a certification authority, the setter 18 restricts connection with a device that holds the certificate indicated by the revocation information or a certificate issued by the certification authority indicated by the revocation information. The restriction of connection with a device is to make settings for excluding the device from a segment to which the device has belonged. More specifically, the restriction of connection with a device is to change settings relating to connection in such a way as to switch from a segment to which the device has belonged to the default segment. Processing for changing the settings relating to connection will be described hereinafter.

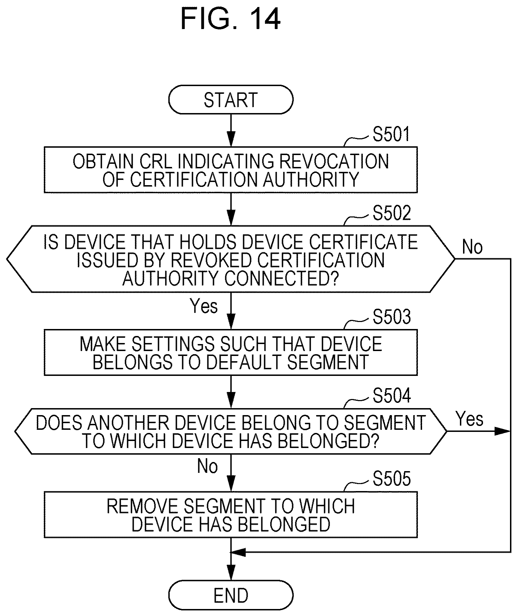

Fig. 14 is a first flowchart illustrating a process at a time when revocation information is obtained by the network device 10 according to the present embodiment. When a CRL indicating revocation of a certification authority is obtained, the network device 10 changes the settings relating to connection such that a device that holds a device certificate issued by the certification authority belongs to the default segment.

In step S501, the network device 10 obtains a CRL indicating revocation of a certification authority.

In step S502, the setter 18 determines whether a device that holds a device certificate issued by the revoked certification authority indicated by the CRL obtained in step S501 is connected to the LAN communicator 12. If the setter 18 determines that the device is connected to the LAN communicator 12 (Yes in step S502), the process proceeds to step S503, and if not (No in step S502), the process illustrated in Fig. 14 ends.

In step S503, the setter 18 sets the LAN communicator 12 such that the device that holds the device certificate issued by the revoked certification authority indicated by the CRL obtained in step S501 belongs to the default segment.

In step S504, the setter 18 determines whether another device belongs to a segment to which the device that holds the device certificate issued by the revoked certification authority indicated by the CRL obtained in step S501 has belonged. If the setter 18 determines that another device belongs to the segment (Yes in step S504), the process illustrated in Fig. 14 ends, and if not (No in step S504), the process proceeds to step S505.

In step S505, the setter 18 removes the segment to which the device that holds the device certificate issued by the revoked certification authority indicated by the CRL obtained in step S501 has belonged.

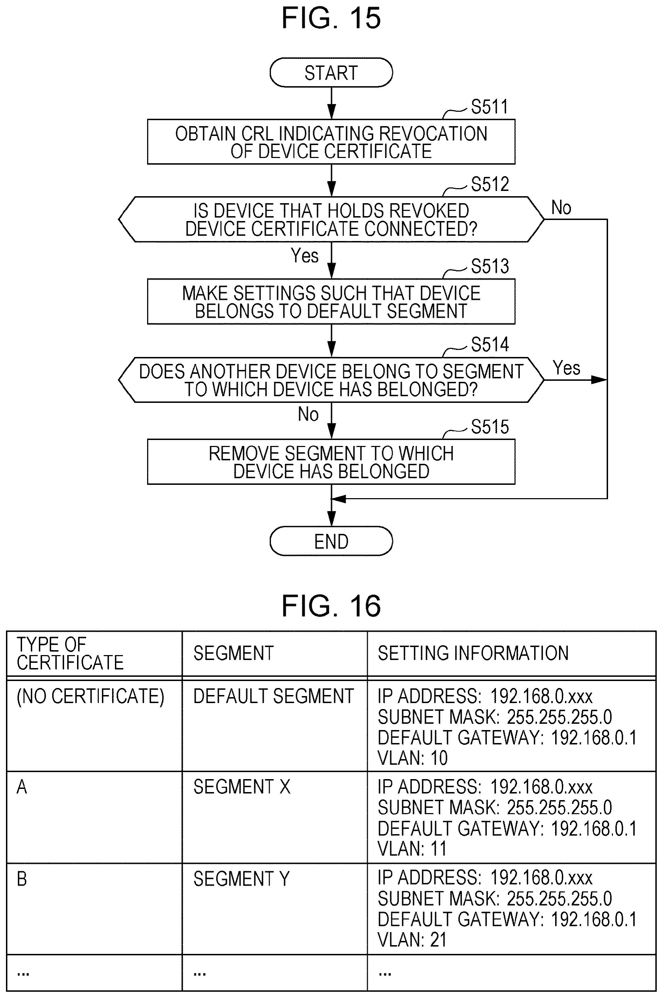

Fig. 15 is a second flowchart illustrating the process at a time when revocation information is obtained by the network device 10 according to the present embodiment. When a CRL indicating revocation of a device certificate is obtained, the network device 10 changes the settings relating to connection such that a device that holds the revoked device certificate belongs to the default segment.

In step S511, the network device 10 obtains a CRL indicating revocation of a device certificate.

In step S512, the setter 18 determines whether a device that holds the revoked device certificate indicated by the CRL obtained in step S511 is connected to the LAN communicator 12. If the setter 18 determines that the device is connected to the LAN communicator 12 (Yes in step S512), the process proceeds to step S513, and if not (No in step S512), the process illustrated in Fig. 15 ends.

In step S513, the setter 18 makes settings such that the device that holds the revoked device certificate indicated by the CRL obtained in step S511 belongs to the default segment.

In step S514, the setter 18 determines whether another device belongs to a segment to which the device that holds the revoked device certificate indicated by the CRL obtained in step S511 has belonged. If the setter 18 determines that another device belongs to the segment (Yes in step S514), the process illustrated in Fig. 15 ends, and if not (No in step S514), the process proceeds to step S515.

In step S515, the setter 18 removes the segment to which the device that holds the revoked device certificate indicated by the CRL obtained in step S511 has belonged.

Another example of the setting table will be specifically described hereinafter.

Fig. 16 is an explanatory diagram illustrating another example of the setting table according to the present embodiment. The setting table illustrated in Fig. 16 can be used when the setter 18 performs setting processing for connecting a device to the network device 10.

The setting table illustrated in Fig. 16 is the same as the setting table illustrated in Fig. 7 other than a fact that setting information includes an ID of a VLAN. Differences in the setting table illustrated in Fig. 16 from the setting table illustrated in Fig. 7 will be described.

In the setting table illustrated in Fig. 16, for example, "no certificate" is associated with the default segment and setting information "IP address: 192.168.0.xxx, subnet mask: 255.255.255.0, default gateway: 192.168.0.1, VLAN: 10".

When a device that does not hold a certificate is attempting to connect to the network device 10, the setter 18 can connect the device to the network device 10 such that the device belongs to the default segment by setting the IP address, the subnet mask, the default gateway, and the VLAN ID included in the setting information to the device.

In addition, for example, type A of certificates is associated with segment X and setting information "IP address: 192.168.10.xxx, subnet mask: 255.255.255.0, default gateway: 192.168.10.1, VLAN: 11".

When a device that holds a certificate of type A is attempting to connect to the network device 10, the setter 18 can connect the device to the network device 10 such that the device belongs to segment X by setting the IP address, the subnet mask, the default gateway, and the VLAN ID included in the setting information to the device.

The network device 10 can thus suppress security attacks in a home network.

### (Second Embodiment)

In the present embodiment, another configuration example of the network device that suppresses security attacks in a home network will be described. The network device according to the present embodiment sets a segment to which a device is to belong using a client certificate in addition to a device certificate.

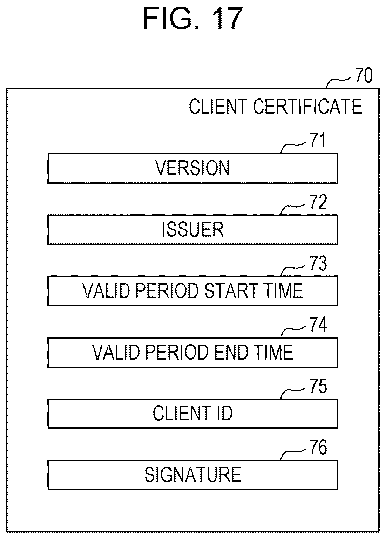

Fig. 17 is an explanatory diagram illustrating a client certificate 70 according to the present embodiment. The client certificate 70 is an example of a certificate held by a device. The client certificate 70 is a certificate proving that a service provider who provides a service for the device has certified, as a certification authority, the device as a client of the service, and is a certificate including identification information unique to the client.

The client certificate 70 includes a version 71, an issuer 72, a valid period start time 73, a valid period end time 74, a client ID 75, and a signature 76.

The version 71 is identification information indicating a version of the client certificate 70.

The issuer 72 is information indicating an issuer who has issued the client certificate 70. The issuer 72 can also be regarded as information indicating a certification authority that has issued the client certificate 70 by certifying the device.

The valid period start time 73 is information indicating a valid period start time of the client certificate 70.

The valid period end time 74 is information indicating a valid period end time of the client certificate 70.

The client ID 75 is identification information that can uniquely identify a device as a client proven by the client certificate 70 to have been certified. As the client ID 75, for example, a number unique to the device (for example, a serial number or a physical address of the device) or the like can be used.

The signature 76 is a digital signature of the issuer (in other words, the certification authority) who has issued the client certificate 70.

A setting method for the network device 10 at a time when a device is attempting to connect to the network device 10 according to the present embodiment is the same as in the first embodiment.

A process in which revocation information for a certificate and a certification authority is used will be described hereinafter.

As an example of the restriction of connection with a device, the setter 18 of the network device 10 makes settings for excluding the device from a segment to which the device has belonged. More specifically, the restriction of connection with a device can include changing the settings relating to connection such that the device is switched from a segment to which the device has belonged to the default segment and disconnecting from the device. This will be specifically described hereinafter.

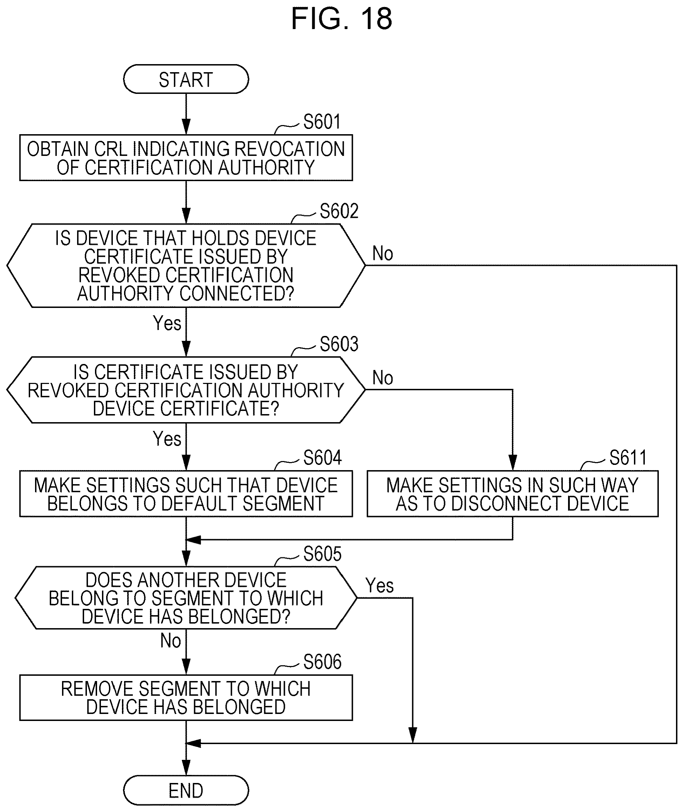

Fig. 18 is a first flowchart illustrating a process at a time when revocation information is obtained by the network device 10 according to the present embodiment. If a CRL indicating revocation of a certification authority is obtained and a certificate is a device certificate, the network device 10 changes the settings relating to connection such that a device that holds the device certificate issued by the revoked certification authority belongs to the default segment. If the certificate is a client certificate, on the other hand, the network device 10 changes the settings relating to connection such that a device that holds the client certificate issued by the revoked certification authority is disconnected. The process illustrated in Fig. 18 might be performed instead of the process illustrated in Fig. 14.

In step S601, the network device 10 obtains a CRL indicating revocation of a certification authority.

In step S602, the setter 18 determines whether a device that holds a certificate issued by the revoked certification authority indicated by the CRL obtained in step S601 is connected to the LAN communicator 12. The certificate may be a device certificate or a client certificate. If the setter 18 determines that the device is connected to the LAN communicator 12 (Yes in step S602), the process proceeds to step S603, and if not (No in step S602), the process illustrated in Fig. 18 ends.

In step S603, the setter 18 determines whether the certificate issued by the revoked certification authority indicated by the CRL obtained in step S601 is a device certificate. If the revoked certificate is a device certificate (Yes in step S603), the process proceeds to step S604, and if not (in other words, if the revoked certificate is a client certificate) (No in step S603), the process proceeds to step S611.

In step S604, the setter 18 sets the LAN communicator 12 such that the device that holds the device certificate issued by the revoked certification authority indicated by the CRL obtained in step S601 belongs to the default segment.

In step S611, the setter 18 sets the LAN communicator 12 such that the device that holds the device certificate issued by the revoked certification authority indicated by the CRL obtained in step S601 is disconnected.

In step S605, the setter 18 determines whether another device belongs to a segment to which the device that holds the certificate issued by the revoked certification authority indicated by the CRL obtained in step S601 has belonged. If the setter 18 determines that another device belongs to the segment (Yes in step S605), the process illustrated in Fig. 18 ends, and if not (No in step S605), the process proceeds to step S606.

In step S606, the setter 18 removes the segment to which the device that holds the certificate issued by the revoked certification authority indicated by the CRL obtained in step S601 has belonged.

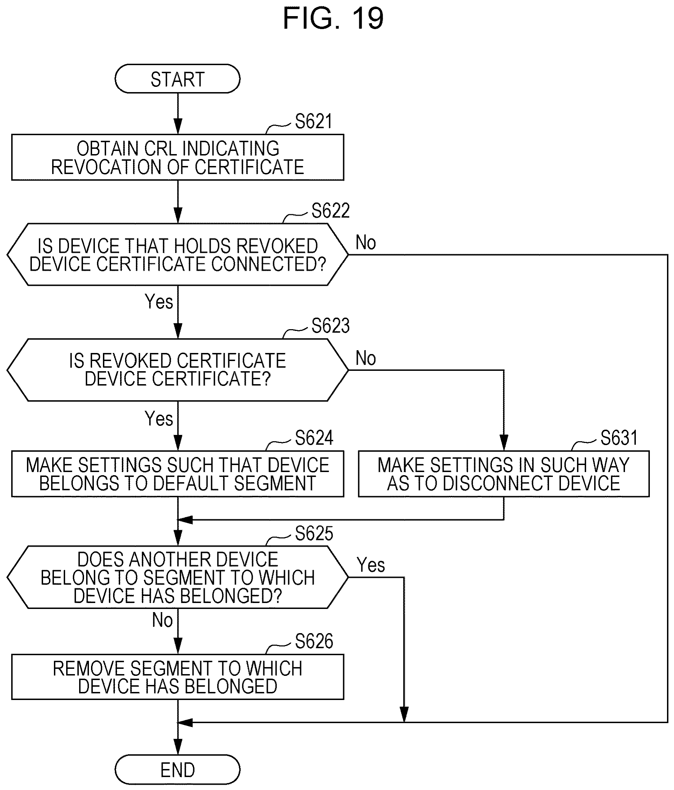

Fig. 19 is a second flowchart illustrating the process at a time when revocation information is obtained by the network device 10 according to the present embodiment. If a CRL indicating revocation of a certificate is obtained and the certificate is a device certificate, the network device 10 changes the settings relating to connection such that a device that holds the revoked device certificate belongs to the default segment. If the certificate is a client certificate, on the other hand, the network device 10 changes the settings relating to connection such that a device that holds the revoked client certificate is disconnected. The process illustrated in Fig. 19 might be performed instead of the process illustrated in Fig. 15.

In step S621, the network device 10 obtains a CRL indicating revocation of a certificate.

In step S622, the setter 18 determines whether a device that holds the revoked certificate indicated by the CRL obtained in step S621 is connected to the LAN communicator 12. If the setter 18 determines that the device is connected to the LAN communicator 12 (Yes in step S622), the process proceeds to step S623, and if not (No in step S622), the process illustrated in Fig. 19 ends.

In step S623, the setter 18 determines whether the revoked certificate indicated by the CRL obtained in step S621 is a device certificate. If the revoked certificate is a device certificate (Yes in step S623), the process proceeds to step S624, and if not (in other words, if the revoked certificate is a client certificate) (No in step S623), the process proceeds to step S631.

In step S624, the setter 18 makes settings such that the device that holds the revoked device certificate indicated by the CRL obtained in step S621 belongs to the default segment.

In step S631, the setter 18 sets the LAN communicator 12 such that the device that holds the certificate issued by the revoked certification authority indicated by the CRL obtained in step S621 is disconnected.

In step S625, the setter 18 determines whether another device belongs to a segment to which the device that holds the revoked certificate indicated by the CRL obtained in step S621 has belonged. If the setter 18 determines that another device belongs to the segment (Yes in step S625), the process illustrated in Fig. 19 ends, and if not (No in step S625), the process proceeds to step S626.

In step S626, the setter 18 removes the segment to which the device that holds the revoked device certificate indicated by the CRL obtained in step S621 has belonged.

The network device 10 can thus suppress security attacks in a home network.

### (Third Embodiment)

In the present embodiment, another configuration example of the network device that suppresses security attacks in a home network will be described.

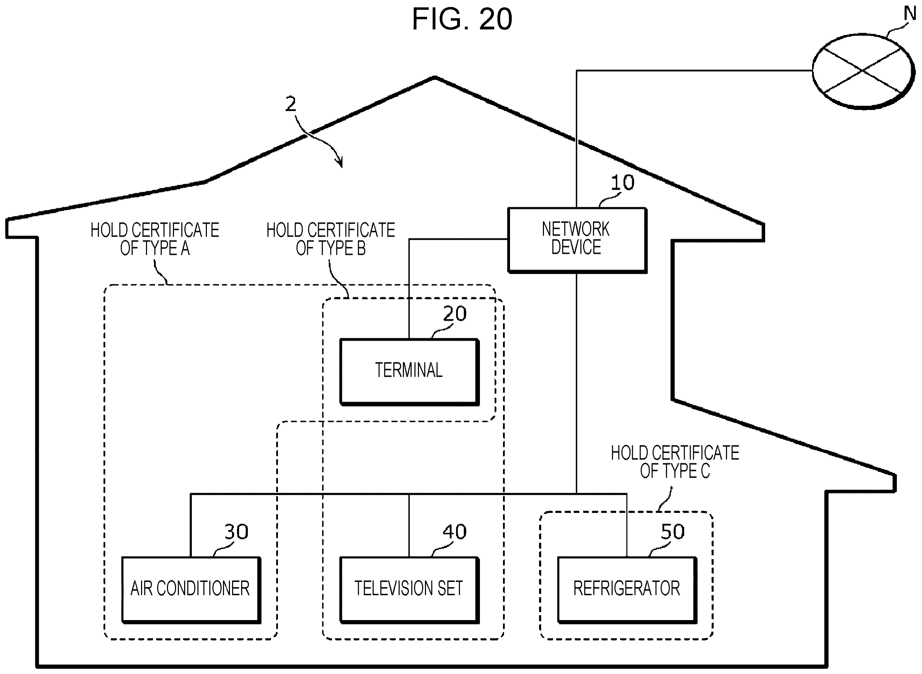

Fig. 20 is a schematic diagram illustrating configuration of a communication system 2 according to the present embodiment.

As with the communication system 1 illustrated in Fig. 1, the communication system 2 illustrated in Fig. 20 is a home network, and includes a network device 10, a terminal 20, an air conditioner 30, a television set 40, and a refrigerator 50.

It is assumed here that the terminal 20 and the air conditioner 30 hold certificates of type A, the terminal 20 and the television set 40 hold certificates of type B, and the refrigerator 50 holds a certificate of type C. In Fig. 20, one or more devices that hold certificates of the same type are surrounded by a broken-line frame.

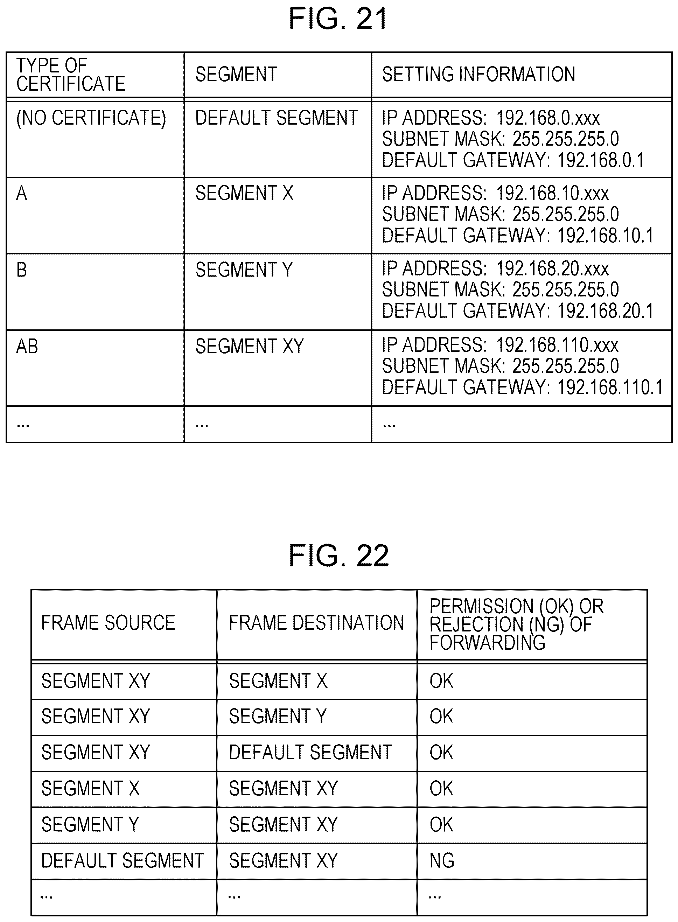

Fig. 21 is an explanatory diagram illustrating a setting table according to the present embodiment. The setting table illustrated in Fig. 21 can be used when the setter 18 performs setting processing for connecting a device to the network device 10.

Fig. 21 illustrates types A, B, and C as types of certificates. Fig. 21 also illustrates a case where a device does not hold a certificate. Note that, as in the first embodiment, types of certificates are determined in advance, for example, in accordance with certification authorities that have issued the certificates, and certificates of types A, B, and C can be issued by certification authorities A, B, and C, respectively. Here, holding of both a certificate of type A and a certificate of type B will be regarded as holding of a certificate of type AB. Type AB is a type different from type A and type B.

Type AB of certificates is associated with segment XY and setting information "IP address: 192.168.110.xxx, subnet mask: 255.255.255.0, default gateway: 192.168.110.1". Segment XY is a segment different from segments X and Y.

When a device that holds a certificate of type AB is attempting to connect to the network device 10, the setter 18 can connect the device to the network device 10 such that the device belongs to segment XY by setting the IP address, the subnet mask, and the default gateway included in the setting information to the device.

Fig. 22 is an explanatory diagram illustrating a forwarding control table that controls forwarding of frames by the network device 10 according to the present embodiment.

The forwarding table illustrated in Fig. 22 includes, as in Fig. 11, entries indicating sources and destinations of frames and permission (described as "OK") or rejection (described as "NG") of forwarding of frames corresponding to the sources and the destinations. Fig. 22 illustrates a subset of the entries in the forwarding table corresponding to segment XY. The forwarding table may further include the entries illustrated in Fig. 11.

Specifically, the forwarding table illustrated in Fig. 22 indicates that forwarding of frames whose source is segment XY and whose destination is segment X, segment Y, or the default segment is permitted. The forwarding table also indicates that forwarding of frames whose source is the default segment and whose destination is segment XY is rejected.

In this case, when a device holds a plurality of certificates, the network device 10 can permit forwarding of frames between devices that hold certificates of the same type or forwarding of frames from devices that hold any certificate to devices that do not hold any certificate and inhibit forwarding of other frames. As a result, the network device 10 can enable operations between devices that hold certificates of the same type or operations performed by devices that hold any certificate on devices that do not hold any certificate while suppressing security attacks that can be carried out between devices that hold certificates of different types. The network device 10 can thus suppress security attacks in a home network.

Note that in each of the above embodiments, each component may be achieved by dedicated hardware or by executing a software program suitable for the component. Each component may be achieved by reading and executing a software program stored in a storage medium such as a hard disk or a semiconductor memory using a program executer such as a CPU or a processor. Here, software for achieving the network device and the like according to each of the above embodiments is the following program.

That is, the program is a setting method for a network device that forwards frames in a home network. The setting method includes obtaining a first certificate of one of a plurality of types from a first device that is attempting to connect to the network device and that holds the first certificate, identifying a first type as the type of the obtained first certificate, and performing first setting processing for connecting the first device to the network device such that the first device belongs to a first segment associated with the identified first type among one or more segments that are one or more forwarding ranges of the frames of the network device and that are each associated with a type of certificate.

Although the network device and the like according to one or a plurality of aspects have been described on the basis of embodiments, the present invention is not limited to these embodiments. Modes constructed by modifying the embodiments in ways conceivable by those skilled in the art and modes constructed by combining components from different embodiments may also be included in the one or plurality of aspects insofar as the scope of the present invention is not deviated from.

### Industrial Applicability

The present invention can be used for a network device included in a home network.

### Reference Signs List

1, 2 communication system
10 network device
11 WAN communicator
12 LAN communicator
13 forwarder
14 DHCP function unit
15 DNS function unit
16, 26, 36 obtainer
17, 27, 37 manager
18 setter
20 terminal
21, 31 communicator
22 operation interface
23 display
24 device controller
25, 35 key manager
30 air conditioner
32 air conditioning function unit
33 device coordinator
34 device authenticator
40 television set
50 refrigerator
60 device certificate
61, 71 version
62, 72 issuer
63, 73 valid period start time
64, 74 valid period end time
65 device ID
66, 76 signature
70 client certificate
75 client ID
N network

## Claims

1. A setting method for a network device that forwards frames in a home network, the setting method comprising:
obtaining a first certificate of one of a plurality of types from a first device that is attempting to connect to the network device and that holds the first certificate;
identifying a first type as the type of the obtained first certificate; and
performing first setting processing for connecting the first device to the network device such that the first device belongs to a first segment associated with the identified first type among one or more segments that are one or more forwarding ranges of the frames of the network device and that are each associated with a type of certificate.

2. The setting method according to claim 1, further comprising:
obtaining a second certificate of a type different from the first type among the plurality of types from a second device that is attempting to connect to the network device and that holds the second certificate;
identifying a second type as the type of the obtained second certificate; and
performing second setting processing for connecting the second device to the network device such that the second device belongs to, among the one or more segments, a second segment that is associated with the identified second type and that is different from the first segment.

3. The setting method according to claim 1,
wherein the obtaining the certificate of the first type includes obtaining the first certificate from the first device when request information for an address to be used for communication in the home network is received from the first device, and
wherein, in the first setting processing, by transmitting response information for assigning an address corresponding to the first segment to the first device, settings are made to connect the first device to the network device such that the first device belongs to the first segment.

4. The setting method according to claim 1,
wherein the type of the first certificate is determined in advance in accordance with a certification authority that has certified the first device.

5. The setting method according to claim 4,
wherein the first certificate is a certificate proving that the first device has been certified by the certification authority and is a certificate including identification information unique to the first device.

6. The setting method according to claim 4,
wherein the first certificate is a certificate proving that a service provider who provides a service for the first device has certified, as the certification authority, the first device as a client of the service, and is a certificate including identification information unique to the client.

7. The setting method according to any of claims 1 to 6, further comprising:
obtaining revocation information indicating revocation of the first certificate obtained from the first device; and
making, when the revocation information is obtained, settings for excluding the first device from the first segment.

8. The setting method according to claim 7,
wherein the type of the first certificate is determined in advance in accordance with a certification authority that has certified the first device, and
wherein the revocation information is revocation information that includes identification information unique to the first device and that indicates revocation of a certificate proving that the first device has been certified by the certification authority.

9. The setting method according to claim 7,
wherein the type of the first certificate is determined in advance in accordance with a certification authority that has certified the first device, and
wherein the revocation information is revocation information indicating revocation of a certificate proving that a service provider who provides a service for the first device has certified, as the certification authority, the first device as a client of the service.

10. The setting method according to any of claims 1 to 6, further comprising:
obtaining revocation information indicating revocation of a certificate of a certification authority that has issued the first certificate obtained from the first device; and
making, when the revocation information is obtained, settings for excluding the first device from the first segment.

11. The setting method according to any of claims 1 to 6, further comprising:
identifying that the first device does not hold a certificate of any of the plurality of types; and
performing third setting processing for connecting the first device to the network device such that the first device belongs to a default segment among the one or more segments.

12. A network device that forwards frames in a home network, the network device comprising:
an obtainer that obtains a first certificate of one of a plurality of types from a first device that is attempting to connect to the network device and that holds the first certificate;
an identifier that identifies a first type as the type of the first certificate obtained by the obtainer; and
a setter that performs first setting processing for connecting the first device to the network device such that the first device belongs to a first segment associated with the first type identified by the identifier among one or more segments that are one or more forwarding ranges of the frames of the network device and that are each associated with a type of certificate.

13. A communication system comprising:
the network device according to claim 12; and
the first device attempting to connect to the network device.
